# EUROPEAN PATENT SPECIFICATION

(11) **EP 1 671 832 B1**
(45) Date of publication and mention of the grant of the patent: **16.11.2011**
(21) Application number: 05027789.6
(22) Date of filing: 19.12.2005
(51) Int. Cl.: B60K 7/00, H02K 7/10, B60K 6/26, B60K 6/44, B60K 6/52

(54) **Electric wheel drive apparatus**
Elektrische Radantriebseinrichtung
Ensemble d' entraînement électrique de roue

(30) Priority: 20.12.2004 JP 2004368370
(43) Date of publication of application: 21.06.2006
(73) Proprietor: DENSO CORPORATION, Kariya-city, Aichi-pref. 448-8661 (JP)
(72) Inventor: Taniguchi, Makoto c/o Denso Corporation, Kariya-city Aichi-pref., 448-8661 (JP); Yukawa, Yasuaki c/o Denso Corporation, Kariya-city Aichi-pref., 448-8661 (JP); Osada, Masahiko c/o Denso Corporation, Kariya-city Aichi-pref., 448-8661 (JP); Kusase, Shin c/o Denso Corporation, Kariya-city Aichi-pref., 448-8661 (JP); Mukai, Takuzou c/o Denso Corporation, Kariya-city Aichi-pref., 448-8661 (JP)
(74) Representative: Kuhnen & Wacker

(56) References cited:
- WO-A-02/089231
- DE-A1- 19 709 579
- US-A- 2 039 513
- US-A- 3 477 536
- US-A- 5 253 724

## Description

### BACKGROUND OF THE INVENTION

### [Technical Field of the Invention]

The present invention relates to an apparatus capable of running using individually and electrically driven wheels, i.e., electric wheels. The present invention is applicable not only to motor vehicles, but also to other objects, such as electric wheelchairs and robots which are able to run. Also, the present invention is applicable to objects having a system in which only a pair of front wheels or a pair of rear wheels is electrically driven, as well as to objects having a system in which all of the wheels are individually and electrically driven. The electric wheels can be provided with power by any of an intemal-combustion-engine-driven generator, a battery or a fuel cell.

### [Related Art]

As described, for example, in Japanese Patent No. 3,333,488, electric wheel type motor vehicles have been well known, in which the wheels are individually driven by providing each of them with a rotary electric machine. The apparatus with the capability of running and having electric wheels of this type have merit in that the vehicle interiors can be made spacious since drive shafts and differential gears can be omitted.

Japanese Unexamined Patent Application Publication No. 2004-090822 suggest electric wheels in each of which the rotational axis of a wheel drive motor is offset from that of the wheel. With these types of wheels, the degree of freedom of arranging the wheel motors can be increased.

However, in the electric wheels disclosed in Japanese Unexamined Patent Application Publication No. 2004-090822, if the wheel driving power is to be increased, the radial length or the axial length of each of the rotary electric machines is also required to be increased. In practice, this has caused limitation and difficulty in mounting the rotary electric machines.

In such individually-driven-wheel type motor vehicles using the rotary electric machines, an operational failure of one of the left and right rotary electric machines for driving one of the left and right wheels can lead to unbalanced power generation between the left and right wheels, thus necessitating suppression of the power generation in the other one of the left and right wheels to match with the power generation of the wheel in failure.

US-patent 5,253,724 discloses an apparatus equipped with electric wheels for movement having the features of preamble of attached claim 1.

US-patent 2,039,513 describes fixedly connecting a brake drum with a sprocket on the rotary shaft of an electric wheel wherein the sprocket is secured to the wheel axial which, in turn, is fastened to the wheel support being integral with the brake drum.

### SUMMARY OF THE INVENTION

It is an object of the present invention to improve an apparatus having the features of the preamble of claim 1 under the aspect of compactness.

This object, in accordance with the present invention, is achieved by an apparatus in accordance with attached claim 1.

Further developments and advantageous embodiments are subject matter of claims 2 to 17.

It is preferred that the rotary shaft of each wheel has an axial direction, a radial direction, and a circumferential direction and the plurality of rotary electric machines are arranged at locations which are the same distance from the rotary shaft of each wheel in the radial direction of the rotary shaft of each wheel, which are the same in the axial direction of the rotary shaft of each wheel, and which are mutually separated by predetermined angles in the circumferential direction of the rotary shaft of each wheel. This may facilitate the arrangement of a torque transmission mechanism for transmitting torque from the rotary electric machines to the respective wheels.

Preferably, the locations of the plurality of rotary electric machines are over the rotary shaft of each wheel. This may ensure a space adjacent to the wheel on the lower side of the axle, so that safety and running property may be improved. Moreover, the slightly upper positioning of the center of gravity of the unsprung portion, can mitigate the input from the road surface that would have been caused by the unsprung load.

Preferably, the plurality of rotary electric machines are common in configurations thereof. This may facilitate the change and mounting of the rotary electric machines and reduce the number of parts.

The controller may include means for determining whether or not any of the plurality of rotary electric machines has a malfunction in the operations thereof and means for, if any machine has the malfunction, making the remaining rotary electric machines other than malfunctioning machine produce a predetermined torque to be given to each wheel. Thus, if one of the rotary electric machines turns out to be in failure, wheel driving may be maintained by other rotary electric machines, by which the reliability of running can be improved.

By way of example, the apparatus further comprises a first wheel pair consisting of the single pair of right and left wheels driven individually as the electric wheels, a second wheel pair consisting of a further single pair of right and left wheels other than the wheels of the first wheel pair, a generator powering the rotary electric machines, and an internal combustion engine driving the generator and supplying power to the second wheel pair. This may reduce the number of rotary electric machines required for driving the wheels, and simplify the structure.

The controller may include means for controlling, in addition to the operations of the rotary electric machines, operations of the generator on the basis of an operation mode including a regenerative braking mode in which both the generator and the rotary electric machines generate power during a period of time in which the vehicle is in regenerative braking. This may enable regenerative braking of all of the four wheels, thereby providing excellent braking performance.

By way of example, the operation mode further includes a two-wheel driving mode in which the wheels of the second wheel pair is driven by the power from the internal combustion engine, a four-wheel driving mode in which the wheels of the second wheel pair are driven by the power from the internal combustion engine and the wheels of the first wheel pair are driven by the power from the rotary electric machines, and wherein the controlling means has means for performing switches among the two-wheel driving mode, the four-wheel driving mode, and the regenerative braking mode depending on information indicating changes in a speed of the vehicle. Note that it is not necessary to provide a plurality of rotary electric machines to each of all the wheels. Thus, one can drive with the four-wheel driving mode only in low-speed running, for example, at the time of starting, hill-climbing and running on a low-friction road surface, and one can drive with the two-wheel driving mode in any other speed running. In this way, depending on the circumstances, e.g., when the vehicle is in a deceleration period, the rotary electric machines can operate as generators to regenerate electric power in an electric storage device, thus contributing to fuel saving while ensuring running property.

The switching means is, for example, configured to perform the switches between the two-wheel driving mode and the four-wheel driving mode when the vehicle begins to start. Thus, a large acceleration from standstill can be attained. Further, depending on the circumstances, e.g., when the vehicle is in a deceleration period, the rotary electric machines can operate as generators to regenerate electric power in an electric storage device, thus contributing to fuel saving while ensuring running property.

By way of example, at least one of the plurality of rotary eclectic machines has a rated capacity greater than a rated capacity of the generator. Thus, the regenerative electric power on the axle side may be made larger than that of the generator. Accordingly, the size of the generator can be reduced, and thus spatial reduction of the engine room can also be realized.

It is preferred that the rotary electric machines are greater in the number of pairs of magnetic poles than the generator. This may allow the induced voltage of the rotary electric machines, whose number of revolutions is lower than that of the generator, to be raised up to substantially the same level as the system voltage (i.e. battery voltage).

It is also preferred that the rotary electric machines are greater In a rated voltage than the generator. This may reduce the size of the rotary electric machines, and thus reduce the unsprung load of the vehicle without losing the power performance.

According to the invention, the apparatus further comprises a torque transfer unit reducing outputs of the plurality of rotary electric machines to transfer the reduced outputs to the shafts, wherein the torque transfer unit comprises either a first pulley or a first sprocket attached to the rotary shaft of each of the wheels, either a second pulley or a second sprocket attached to the rotary shaft of each of the plurality of rotary electric machines, and a belt linking either the first pulley or the first sprocket and all of either the second pulley or the second sprocket, every wheel, to transfer the torque therebetween This may allow omission of gears or chains, for preventing noise that would have otherwise been caused by them, and accordingly may allow omission of lubricating devices. As a result, the structure may be simplified.

Each wheel is equipped with a braking unit with a rotational member positioned on each wheel side and either the first pulley or the first sprocket is fixedly attached to the rotational member. Thus, the number of component parts may be reduced. In particular, by allowing a brake drum to also operate as a hub portion of the pulley, a pulley hub may be omitted.

By way of example, the plurality of rotary electric machines are two in number, either the second pulley or the second sprocket are fixedly attached to the rotary shafts of the two rotary electric machines, respectively, and the controller is configured to control the operations of the two rotary electric machines such that the belt between the two pulleys or the two sprockets is imparted with a tensile force. Thus, the belt between the pair of pulleys or sprockets on the side of each of the rotary electric machines may be imparted with a tensile force, which may enable smooth power transmission without loosening the belt.

Preferably, the torque transfer unit comprises an idle pulley which is located between the two pulleys or the two sprockets so as to change a transfer direction of the belt. Thus, the contact-angular ranges (contact angles) of the pulleys or sprockets on the side of each of the rotary electric machines with respect to the belt may be formed in an economized space.

As an example, the plurality of rotary electric machines are three or more in number, the belt is a double-side belt, and the three or more rotary electric machines include two rotary electric machines located adjacently with each other, the mutually-adjacent two rotary electric machines rotating oppositely in rotational directions to each other via the double-side belt. Thus, even if the number of rotary electric machine is increased, the contacted ranges with respect to the belt may be effectively formed to enable power transmission in an economized space.

It is preferred that the torque transfer unit is accommodated in-side each wheel. Thus, since the belt power transmission systems each including the pulleys or sprockets are accommodated inside the respective wheels, the luggage compartment and the passenger compartment may be enlarged. Further, waterproof sealing may be readily effected to the respective wheels.

As still another aspect of the present invention, the apparatus equipped with electric wheels, comprising: rotary electric machines individually powering wheel assemblies serving as the electric wheels, the wheel assemblies each having a rotary shaft and a wheel; a controller controlling the operations of the rotary electric machines; either a first pulley or a first sprocket fixedly attached to either the rotary shaft or the wheel of each wheel assembly; either a second pulley or a second sprocket fixedly disposed to position outward in a radial direction of either the first pulley or the first sprocket in the wheel of each wheel assembly; a belt linking either the first pulley or the first sprocket and either the second pulley or the second sprocket to transfer a torque therebetween, wherein each of the rotary electric machines are shifted from an axle of each wheel and either the second pulley or the second sprocket is fixedly secured on the rotary shaft of each wheel.

In this way, the simplified structure allows reduction of the number of revolutions of the rotary electric machines for transmission to the wheels. Further, the simplified structure allows individual driving of the respective electric wheels by the rotary electric machines, without using the engagement of gears. Furthermore, comparing with the arrangement in which the rotary electric machines and the respective electric wheels engage with each other, the arrangement of the present invention can effectively reduce noise, improve environmental resistance, and reduce the weight of the electric wheels.

### BRIEF DESCRIPTION OF THE DRAWINGS

In the accompanying drawings:
- Fig. 1: is a schematic cross section along the axial direction of an electric wheel of a vehicle according to a first embodiment of the present invention;
- Fig. 2: is a side elevation of the electric wheel shown in Fig. 1 as viewed along a II- II line from the inside of the electric wheel toward the axial direction;
- Fig. 3: is a schematic top view of an electric system of a vehicle of a vehicle loading the electric wheels shown in Fig. 1;
- Fig. 4: is a side elevation showing a modification of the electric wheel according to the first embodiment;
- Fig. 5: is a side elevation showing an electric wheel of a vehicle according to a second embodiment of the present invention;
- Fig. 6: is a cross section along the axial direction of an electric wheel of a vehicle according to a third embodiment of the present invention; and
- Fig. 7: is an enlarged view of the principal part of Fig. 6.

### DETAILED DESCRIPTION OF THE PREFERRED EMBODIMENTS

Some embodiments of apparatuses, such as vehicles, each having the electric wheels of the present invention will now be described, with reference to the accompanying drawings.

### (First Embodiment)

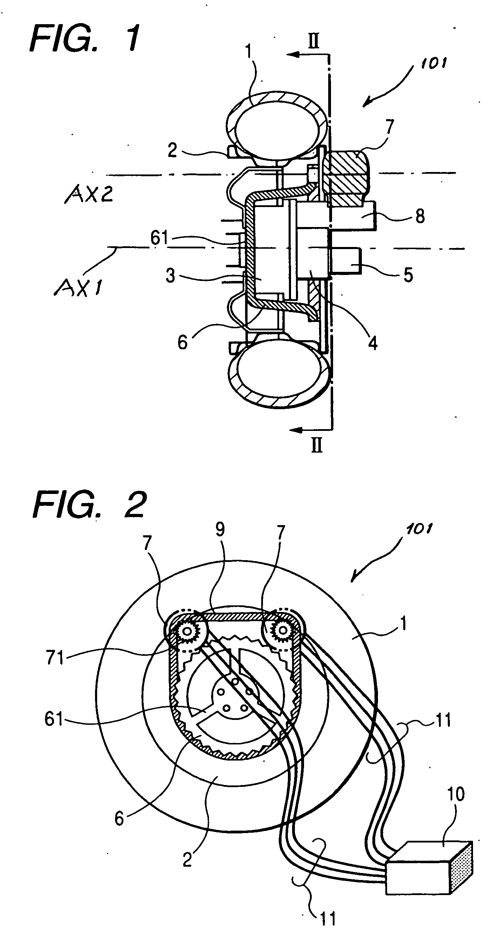

First, with reference to Figs. 1 to 3, a vehicle having electric wheels according to a first embodiment will now be described.

As shown in Fig. 1, an electric wheel 101 of a vehicle according to the first embodiment comprises a tire 1, a wheel 2, and a brake drum 3, which are mounted in a manner rotatable with an axle (not shown) of the running body (note that AX1 in the figure indicates the axial direction of the axle).

An axle bearing (not shown) rotatably supporting the axle is loaded in the brake drum 3. The fixed side of the axle bearing is supported by a trailing arm 5 through a support member 4. A driven sprocket 6 is fixed to the wheel 2 and the brake drum 3 for clamping them all together. In particular, the driven sprocket 6 Is fixed to the axle in the wheel 2 through a hub 61.

Generators/motors (hereinafter also each referred to as MG) 7, each consisting the rotary electric machine referred to herein, are provided in the electric wheel 101 having the configuration described above. The MGs 7 are supported and fixed by a support member 8 at a position offset from the axis of rotation of the electric wheel 101 (note that AX2 in the figure indicates the axial direction of the axis of rotation of the MG 7).

As shown in Fig. 2, in the present embodiment, two MGs 7 are mounted per one electric wheel 101, but the number may be more. In the present embodiment, the two MGs 7 are arranged at the positions distanced in the radial direction of the axle by the same length, and on the same plane normal to the axial direction of the axle, being apart from each other in the circumferential direction of the axle with a predetermined angle therebetween.

A driving sprocket 71 is fixed to the rotary shafts of the MGs 7. As shown in Fig. 2, the power generated by the MGs 7 is transmitted from the driving sprocket 71 to the driven sprocket 6 through a cog belt 9. In the present embodiment, the power transmission portion including the driven sprocket 6 and the cog belt 9 are laid out so as to be accommodated inside the wheel 2.

As shown in Fig. 2, the two MGs 7 are electrically connected to an inverter device 10 through two pairs of three-phase cables 11. The inverter device 10 includes a pair of three-phase inverters with which the two MGs 7 are individually subjected to the drive control. Note that if a rotational angle between a stator and a rotor of one of the two MGs 7 constantly agrees with that of the other of the two MGs 7 by the adjustment, for example, of a timing belt, this may enable a single three-phase inverter to parallelly supply power to these two MGs 7.

In the present embodiment, the two MGs 7 are constituted of magnetic rotor type three-phase synchronous machines, respectively, of the same model, which are driven in the same rotational direction with the same number of revolutions. Thus, rotational power is transmitted from the driving sprocket 71 to the driven sprocket 6 through the cog belt 9 to rotatably drive the latter in the same direction as the former. Accordingly, the wheel 2, to which the driving sprocket 6 is fixed, is rotatably driven about the axle together with the tire 1.

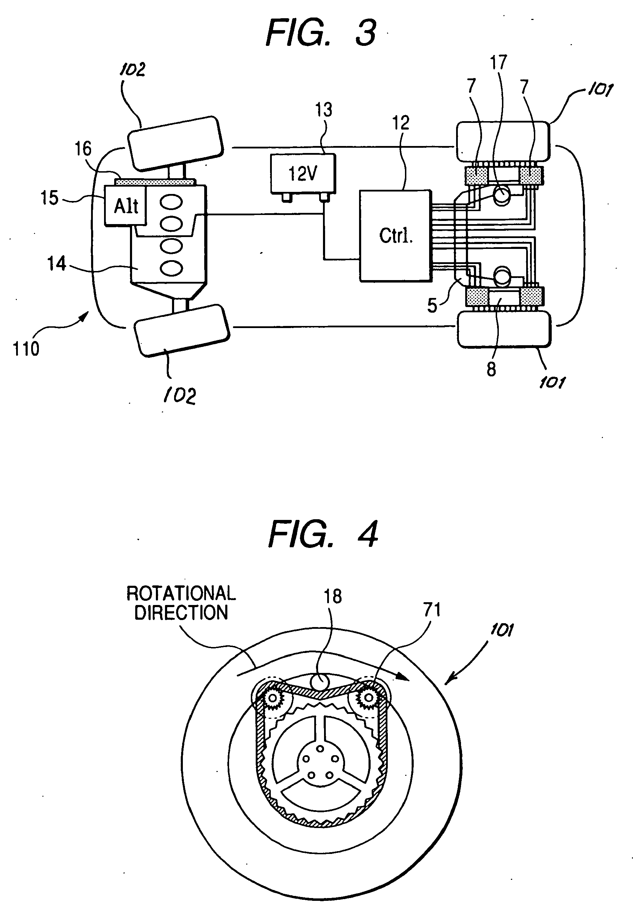

A vehicle loading the electric wheels 101 of the above configuration is described hereunder with reference to Fig. 3.

The vehicle shown in Fig. 3 is the one that applies an automobile. A vehicle body 110 Is provided therein with a controller 12, a battery (on-vehicle battery) 13 of predetermined voltage (e.g. 12V), and an alternator 15 serving as a generator, In addition to a pair of rear wheels consisting of the electric wheels 101 which are driven by the MGs 7 as described above, and a pair of front wheels 102 which are driven by an internal combustion engine (engine) 14.

The controller 12 incorporates therein with a pair of inverter devices 10 described above (see Fig. 2), and a control unit (not shown) for controlling a total of four three-phase inverters included in the pair of inverter devices 10. The alternator 15. is a generator/motor which is driven by the rotation of a crankshaft in the engine 14 through a belt 16, and stores the generated electric power in the on-vehicle battery 13. The battery 13 supplies power to each of the MGs 7 through the inverter devices 10. Note that components around the tires 1 of the electric wheels 101 are suspended from the vehicle body by an attenuator/damper which also serves as a coil spring.

In this arrangement, the controller 12 controls the respective MGs 7 with a preset electromotive (power running) mode or a power generating (regenerative braking) mode, according to vehicle driving conditions. In the electromotive mode, power is supplied to each of the MGs 7 from the alternator 15 that serves as a generator and from the battery 13 through the inverter devices 10. In the power generating mode, the electric power (regenerative electric power) generated by the respective MGs 7 is stored in the on-vehicle battery 13. If required, the electric power is consumed to electrically drive the alternator 15. Note that the controller 12 also controls the power generation or the electromotive operation of the alternator 15, in addition to the control of the respective MGs 7.

Hereinafter is described the general operation of the present embodiment.

The supply of fuel to the engine 14 is controlled according to the stepping angle of an accelerator pedal (not shown) by a motor vehicle driver. Thus, the pair of front wheels 102 is driven by way of a known torque transmission system for vehicle, not shown. The pair of rear wheels consisting of the electric wheels 101 is driven by the respective pairs of MGs 7. It is apparent that the pair of MGs 7 for driving the same one wheel constitutes the rotary electric machines referred to herein.

In performing the driving described above when a motor vehicle is started, rear-wheel driving is performed by the MGs 7, in addition to the front-wheel driving by the engine. When a motor vehicle travels straight ahead, the controller 12, as a matter of course, carries out control to match the torque and the number of revolutions between the two rear wheels. This may achieve a stable starting performance in comparison with the case where two front wheels are simply driven by an engine. In particular, in low-friction road surface conditions or the like in winter time, skidding of the rear wheels can be suppressed.

In the present embodiment, the cog belt 9 is used for torque transmission between the MGs 7 and the wheel 2. Comparing with the driving caused by engagement between gears, torque transmission in this manner provides such excellent advantages as reduction of noise and omission of a lubricating mechanism.

Further, in the present embodiment, the center of gravity of the two MGs 7 is located above the center of axle. Thus, environmental resistance, i.e. effects of preventing entry such as of dust and moisture can be improved, and the input from the road surface to the vehicle body caused by the increase of unsprung load can be mitigated.

### (Modification)

A modification of the first embodiment provided above is described hereunder with reference to Fig. 4. In this modification, an idle pulley 18 is mounted at the driving sprocket 71 between the two MGs 7 in the electric wheel 101 described above. The idle pulley 18 is rotatably attached to the side of the vehicle body in the same manner as the housing of each MG 7 to press the cog belt 9 inward in the radial direction of the axle of the electric wheel 101. Thus, the wound angular ranges (i.e., contact angles) of the cog belt 9 with respect to the two MGs 7 may be formed in an economized space to thereby improve the torque transmission performance.

In the present modification, the torque generated by the MG 7 (the right one in Fig. 4), which is forwardly positioned in the rotational direction shown in Fig. 4, is controlled to be larger than that of another MG 7 (the left one in Fig. 4). This causes tension in the cog belt 9 between the two MGs 7 for preventing the looseness thereabout, so that smoother power transmission can be achieved.

### (Second Embodiment)

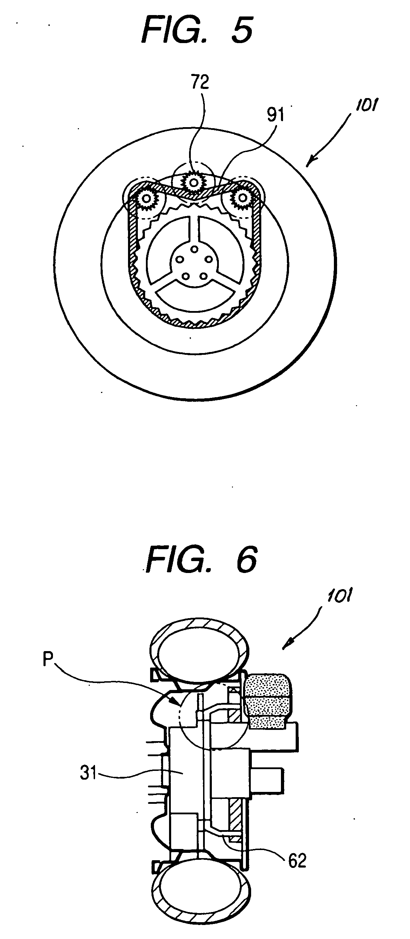

An electric wheel of a vehicle according to a second embodiment is described hereunder with reference to Fig. 5.

As shown in Fig. 5, in the present embodiment, a third MG 72 is mounted between the two MGs 7 in the electric wheel 101 shown in Figs. 2 and 4, and a double-side soothed cog belt 91 is used as a cog belt. The remaining arrangement is the same as the first embodiment.

The MG 72 has the same number of revolutions as the two MGs 7 but rotates in the reverse direction. Thus, in the present embodiment, driving power can be readily enhanced without losing the transmission performance of the belt.

Note that, in the present embodiment, the more the transmission power is increased, the wider the belt width may be set. By arranging more odd-number MGs 7 and even-number MGs 72 In the same manner, the double-side soothed cog belt 91 can be driven with more number of MSs 7 and MGs 72, so that, also, the wound angular range of the belt with respect to each MG 7 may be formed in an economized space.

### (Third Embodiment)

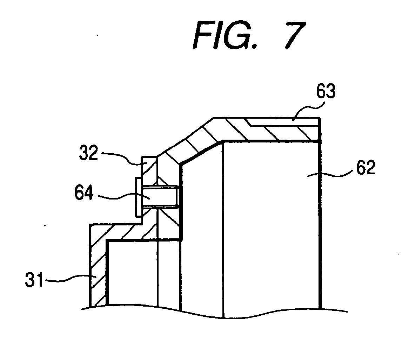

An electric wheel of a vehicle according to a third embodiment is described hereunder with reference to Figs. 6 and 7.

As shown in Fig. 6, In the present embodiment, a driven sprocket 62 is fixedly fastened to the brake drum 31 in the electric wheel 101 shown in Fig. 1. An enlarged view of a portion P, i.e. the fixedly fastened portion, is shown in Fig. 7 to show the detail. As can been seen from the figure, the driven sprocket 62 is fastened at a flange 32 of the brake drum 31 through a plurality of bolts 64. Indicated by numeral 63 in the figure is a soothed portion of the driven sprocket 62 which is to be in contact with the cog belt 9. The remaining arrangement is the same as the first embodiment.

According to the present embodiment, a portion of the fixed hub 61 of the driven sprocket 62 can also serve as a hub of the brake drum 31. As a result, such effects can be expected as much more reduction of the number of parts, and the reduction of the unsprung load caused by the reduction in the weight of parts.

According to each of the embodiments described above, more excellent effect of increasing wheel driving power can be exerted comparing with the conventional electric wheels, while decreasing the inertial mass of the rotary electric machines. In addition, degree of freedom of loading can also be increased by the dispersed distribution of the small rotary electric machines, avoiding interference with other suspension parts or the like.

Additionally, fuel consumption of hybrid electric vehicles can be effectively improved, while achieving small capacity electric power system, owing to the provision of the pair of wheels driven by the internal combustion engine, and the pair of electric wheels driven by the rotary electric machines. In this way, the balance between costs and performance can also be improved, realizing enlargement of the vehicle interior space, which is peculiar to vehicles of electric wheels.

Further, by using the small rotary electric machines, the following effects can also be attained from the generally known relation between the output of rotary electric machines and the moment of inertia of their rotating portions.

Specifically, the output of rotary electric machines is generally in proportion to their magnetic loading. For example, when a diameter of a rotor of a rotary electric machine is indicated by D and an effective axial length is indicated by L, the magnetic loading is expressed by D<2> XL. Accordingly, assuming that the same magnetic loading is realized by two small-diameter rotary electric machines, the diameter of these machines will be about 1/1.4 relative to a single rotary electric machine in use. Further, the moment of inertia of a rotor is expressed by GxD<2> , where G is in proportion to ( /4)XD<2> XL. Accordingly, the moment of inertia of a large rotary electric machine is in proportion to ( /4)XD<4> XL. Contrarily, the moment of inertia of the two small rotary electric machines is expressed by ( /8)XD<4> XL , which means achievement of significant reduction. Additionally, since the mass-production conventional motors can be utilized as such small-size rotary electric machines, an effect of significantly reducing manufacturing costs including changing costs can be expected.

In each of the embodiments described above, the two MGs 7 are arranged at the positions distanced in the radial direction of the axle by the same length, and on the same plane normal to the axial direction of the axle, being apart from each other in the circumferential direction of the axle with a predetermined angle therebetween. As a result, a particularly good effect, i.e. to readily enable torque distribution control between the two MGs 7, can be achieved.

Further, since motors of the same model are employed as the two MGs 7, volume efficiency can be enhanced and thus maintenance is simplified.

According to the present invention, malfunction of the MGs 7 may be readily detected by measuring the current to the MGs 7. Therefore, in the event malfunction of one MG 7 and the three-phase inverter driving the MG 7 is detected, the wheel output of the other MG 7 may be permitted to increase within the rated capacity range. Thus, reliability of operation can be significantly enhanced.

In the embodiments described above, the arrangement has been such that the front wheels are driven by the engine, and the rear wheels are driven by the motors. However, the reverse arrangement is also possible, i.e. the front wheels may be driven by the motors, and the rear wheels may be driven by the engine.

Note that the present invention should not be limited to the embodiments described above. Needless to say, the technical concept of the present invention may be combined with other known techniques, or other techniques of which the required function is common to that of the present invention, as long as the subject matter lies within the scope of protection claimed.

## Claims

1. An apparatus equipped with electric wheels (101) for movement, comprising :
a pair of right and left wheels (2), each wheel having a rotary shaft and each wheel being equipped with a braking unit positioned on each wheel side;
a plurality of rotary electric machines (7) driving each of the right and left wheels so that the wheels serve as the electric wheels, wherein the plurality of rotary electric machines driving the same wheel of the pair of right and left wheels each have a rotary shaft positionally shifted from the rotary shaft of said wheel; and
a controller (10, 12) controlling operations of the rotary electric machines (7); and
a torque transfer unit reducing outputs of the plurality of rotary electric machines to transfer the reduced outputs to the shaft of each wheel, wherein the torque transfer unit comprises for each wheel:
either a first pulley (6) or a first sprocket fixedly attached to the rotary shaft of the wheel (2),
either a second pulley (71) or a second sprocket attached to the rotary shaft of each of the plurality of rotary electric machines driving said wheel, which are supported by a support member (8), and
a belt (9) linking either the first pulley or the first sprocket and all of the second pulleys or second sprockets respectively to transfer the torque therebetween;
**characterized in that** the braking unit comprises a brake drum (3) positioned on each wheel side, and **in that** the first pulley or the first sprocket is fixedly attached to said break drum (3).

2. The apparatus according to claim 1, wherein the rotary shaft of each wheel (2) has an axial direction, a radial direction, and a circumferential direction and
the plurality of rotary electric machines (7) are arranged at locations which are the same distance from the rotary shaft of each wheel (2) in the radial direction of the rotary shaft of each wheel, which are the same in the axial direction of the rotary shaft of each wheel, and which are mutually separated by predetermined angles in the circumferential direction of the rotary shaft of each wheel (2).

3. The apparatus according to claim 2, wherein the locations of the plurality of rotary electric machines (7) are above the rotary shaft of each wheel (2).

4. The apparatus according to claim 2, wherein the plurality of rotary electric machines (7) are common in configurations thereof.

5. The apparatus according to claim 1, wherein the controller (10, 12) includes means for determining whether or not any of the plurality of rotary electric machines (7) has a malfunction in the operation thereof and means for, if any machine has the malfunction, making the remaining rotary electric machines other than the malfunctioning machine produce a predetermined torque to be given to each wheel (2).

6. The apparatus according to claim 1, further comprising
a first wheel pair consisting of the said pair of right and left wheels (2) driven individually as the electric wheels (101),
a second wheel pair (102) consisting of a further pair of right and left wheels other than the wheels of the first wheel pair,
a generator (15) powering the rotary electric machines (7), and
an internal combustion engine (14) driving the generator and supplying power to the second wheel pair.

7. The apparatus according to claim 6, wherein the controller (12) includes means for controlling, in addition to the operations of the rotary eclectic machines (7), operations of the generator (15) on the basis of an operation mode including a regenerative braking mode in which both the generator (15) and the rotary electric machines (7) generate power during a period of time in which the vehicle is in regenerative braking.

8. The apparatus according to claim 7, wherein the operation mode further includes
a two-wheel driving mode in which the wheels of the second wheel pair (102) is driven by the power from the internal combustion engine (14),
a four-wheel driving mode in which the wheels of the second wheel pair (102) are driven by the power from the internal combustion engine (14) and the wheels of the first wheel pair (102) are driven by the power from the rotary electric machines (7), and
wherein the controlling means (12) has means for performing switches among the two-wheel driving mode, the four-wheel driving mode, and the regenerative braking mode depending on information indicating changes in a speed of the vehicle.

9. The apparatus according to claim 8, wherein the switching means is configured to perform the switches between the two-wheel driving mode and the four-wheel driving mode when the vehicle begins to start.

10. The apparatus according to claim 6, wherein at least one of the plurality of rotary eclectic machines (7) has a rated capacity greater than a rated capacity of the generator (15).

11. The apparatus according to claim 6, wherein the rotary electric machines (7) are greater in the number of pairs of magnetic poles than the generator (15).

12. The apparatus according to claim 6, wherein the rotary electric machines (7) are greater in a rated voltage than the generator (15).

13. The apparatus according to claim 1, wherein the plurality of rotary electric machines (7) are two in number,
the second pulley or the second sprocket (71) are fixedly attached to the rotary shafts of the two rotary electric machines (7), respectively, and
the controller (10, 12) is configured to control the operations of the two rotary electric machines (7) such that the belt (9) between the two pulleys or the two sprockets is imparted with a tensile force.

14. The apparatus according to claim 13, wherein the torque transfer unit comprises an idle pulley (18) which is located between the two pulleys (71) or the two sprockets so as to change a transfer direction of the belt (9).

15. The apparatus according to claim 1, wherein the plurality of rotary electric machines (7) are three or more in number,
the belt is a double-side belt (91), and
the three or more rotary electric machines (7) include two rotary electric machines located adjacently with each other, the mutually-adjacent two rotary electric machines rotating oppositely in rotational directions to each other via the double-side belt.

16. The apparatus according to claim 1, wherein the torque transfer unit is accommodated inside each wheel.

17. An apparatus according to claim 1, comprising at least a pair of wheel assemblies wherein each wheel assembly includes said wheel (2) having said rotary shaft and said brake drum (3) mounted on the rotary shaft, and said plurality of rotary electric machines (7) each having a power output shaft and rotating in the same direction and at the same rotational speed;
wherein the controller controls individually the operation of the wheel assemblies; and
wherein the rotary electric machines (7) are arranged such that all power output shafts of the rotary electric machines are off-center within the wheel (2) of the wheel assembly.

## Patentansprüche

1. Vorrichtung, die mit elektrischen Rädern (101) zur Fortbewegung ausgestattet ist, aufweisend:
ein Paar rechter und linker Räder (2), wobei jedes Rad eine Drehwelle aufweist, und wobei jedes Rad mit einer Bremseinheit ausgestattet ist, die zu beiden Seiten des Rades angeordnet ist;
eine Mehrzahl rotierender elektrischer Maschinen (7), die jedes der rechten und linken Räder derart ansteuern, dass die Räder als die elektrischen Räder fungieren, wobei die Mehrzahl rotierender elektrischer Maschinen, die dasselbe Rad von dem Paar rechter und linker Räder antreiben, jeweils eine Drehwelle aufweisen, die zur Drehwelle des Rades versetzt angeordnet ist; und
eine Steuereinrichtung (10, 12), die Operationen der rotierenden elektrischen Maschinen (7) steuert; und
eine Drehmoment-Übertragungseinheit, die Ausgangsleistungen der Mehrzahl rotierender elektrischer Maschinen (7) reduziert, um die reduzierten Ausgangsleistungen auf die Wellen der einzelnen Räder zu übertragen, wobei die Drehmoment-Übertragungseinheit für jedes Rad aufweist:
jeweils eine erste Riemenscheibe (6) oder ein erstes Kettenrad, die bzw. das an der Drehwelle des Rades (2) festgelegt ist,
jeweils eine zweite Riemenscheibe (71) oder ein zweites Kettenrad, die bzw. das an der Drehwelle von jeder von der Mehrzahl von rotierenden elektrischen Maschinen befestigt ist, welche das Rad ansteuern und von einem Trägerelement (8) getragen werden, und
einen Riemen (9), der jeweils die erste Riemenscheibe oder das erste Kettenrad oder sämtliche zweite Riemenscheiben oder zweiten Kettenrädern miteinander verbindet, um das Drehmoment zwischen diesen zu übertragen;
**dadurch gekennzeichnet, dass** die Bremseinheit eine Bremstrommel (3) aufweist, die an jeder Radseite angeordnet ist, und dass die erste Riemenscheibe oder das erste Kettenrad an der Bremstrommel (3) festgelegt ist.

2. Vorrichtung nach Anspruch 1, wobei eine Drehwelle jedes Rads (2) eine axiale Richtung, eine radiale Richtung und eine Umfangsrichtung aufweist, und
wobei jede von der Mehrzahl rotierender elektrischer Maschinen (7) an Positionen angeordnet ist, die in der radialen Richtung der Drehwelle jedes Rades den gleichen Abstand zur Drehwelle jedes Rades (2) aufweisen, die in der axialen Richtung der Drehwelle jedes Rades gleich sind, und die in der Umfangsrichtung der Drehwelle jedes Rades (2) vorgegebene Winkelabstände zueinander aufweisen.

3. Vorrichtung nach Anspruch 2, wobei die Positionen der Mehrzahl rotierender elektrischer Maschinen (7) sich oberhalb der Drehwellen der einzelnen Räder (2) befinden.

4. Vorrichtung nach Anspruch 2, wobei jede von der Mehrzahl rotierender elektrischer Maschinen (7) den gleichen Aufbau hat.

5. Vorrichtung nach Anspruch 1, wobei die Steuereinrichtung (10, 12) ein Mittel aufweist zur Bestimmung, ob eine von der Mehrzahl rotierender elektrischer Maschinen (7) fehlerhaft arbeitet oder nicht, und ein Mittel aufweist zur Bewirkung, dass, falls eine Maschine fehlerhaft arbeitet, die übrigen rotierenden elektrischen Maschinen außer der fehlerhaft arbeitenden elektrischen Maschine ein vorgegebenes Drehmoment erzeugen, das an die einzelnen Räder (2) ausgegeben wird.

6. Vorrichtung nach Anspruch 1, ferner aufweisend:
ein erstes Räderpaar, das aus dem Paar rechter und linker Räder (2) besteht, die einzeln als die elektrisch angetriebenen Räder (101) angetrieben werden,
ein zweites Räderpaar (102), das aus einem weiteren Paar rechter und linker Räder besteht, bei denen es sich nicht um die Räder des ersten Räderpaars handelt,
einen Generator (15), der die rotierenden elektrischen Maschinen (7) mit Leistung versorgt, und
einen Verbrennungsmotor (14), der den Generator antreibt und Leistung zum zweiten Räderpaar liefert.

7. Vorrichtung nach Anspruch 6, wobei die Steuereinrichtung (12) ein Mittel aufweist zum Steuern des Betriebs des Generators (15), zusätzlich zum Betrieb der rotierenden elektrischen Maschinen (7), auf Basis eines Betriebsmodus, der einen regenerativen Bremsmodus beinhaltet, in dem sowohl der Generator (15) als auch die rotierenden elektrischen Maschinen (7) während eines Zeitraums, in dem das Fahrzeug ein regeneratives Bremsen durchführt, Leistung erzeugen.

8. Vorrichtung nach Anspruch 7, wobei der Betriebsmodus ferner beinhaltet:
einen Zweirad-Antriebsmodus, in dem die Räder des zweiten Räderpaars (102) mit der Leistung vom Verbrennungsmotor (14) angetrieben werden,
einen Vierrad-Antriebsmodus, in dem die Räder des zweiten Räderpaars (102) mit Leistung vom Verbrennungsmotor (14) angetrieben werden und die Räder des ersten Räderpaars (102) mit Leistung von den rotierenden elektrischen Maschinen (7) angetrieben werden, und
wobei das Steuermittel (12) ein Mittel aufweist zur Durchführung von Umschaltungen zwischen dem Zweirad-Antriebsmodus, dem Vierrad-Antriebsmodus und
dem regenerativen Bremsmodus, abhängig von Informationen, die Änderungen einer Fahrzeuggeschwindigkeit anzeigen.

9. Vorrichtung nach Anspruch 8, wobei das Umschaltungsmittel so ausgelegt ist, dass es Umschaltungen zwischen dem Zweirad-Antriebsmodus und dem Vierrad-Antriebsmodus durchfährt, sobald das Fahrzeug gestartet wird.

10. Vorrichtung nach Anspruch 6, wobei mindestens eine von der Mehrzahl rotierender elektrischer Maschinen (7) eine Nennleistung aufweist, die höher ist als eine Nennleistung des Generators (15).

11. Vorrichtung nach Anspruch 6, wobei die rotierenden elektrischen Maschinen (7) eine größere Anzahl von Magnetpolen aufweisen als der Generator (15).

12. Vorrichtung nach Anspruch 6, wobei die rotierenden elektrischen Maschinen (7) eine höhere Nennspannung aufweisen als der Generator (15).

13. Vorrichtung nach Anspruch 1, wobei die Mehrzahl der rotierenden elektrischen Maschinen (7) einer Zahl zwei entspricht,
wobei die zweite Riemenscheibe oder das zweite Kettenrad (71) jeweils an den Drehwellen der beiden rotierenden elektrischen Maschinen (7) festgelegt ist, und wobei die Steuereinrichtung (10, 12) dafür ausgelegt ist, den Betrieb der beiden rotierenden elektrischen Maschinen (7) jeweils derart zu steuern, dass der Riemen (9) zwischen den beiden Riemenscheiben oder den beiden Kettenrädern mit einer Zugkraft beaufschlagt wird.

14. Vorrichtung nach Anspruch 13, wobei die Drehmoment-Übertragungseinheit eine Umlenkscheibe (18) aufweist, die zwischen den beiden Riemenscheiben (71) oder den beiden Kettenrädern angeordnet ist, um eine Übertragungsrichtung des Riemens (9) zu ändern.

15. Vorrichtung nach Anspruch 1, wobei die Mehrzahl der rotierenden elektrischen Maschinen (7) mindestens einer Zahl 3 entspricht,
wobei der Riemen ein doppelseitiger Riemen (91) ist, und
wobei die drei oder mehr rotierenden elektrischen Maschinen (7) zwei rotierende elektrische Maschinen beinhalten, die nebeneinander angeordnet sind, wobei die nebeneinander angeordneten rotierenden elektrischen Maschinen sich mittels des doppelseitigen Riemens in zueinander entgegengesetzten Drehrichtungen drehen.

16. Vorrichtung nach Anspruch 1, wobei die Drehmoment-Übertragungseinheit in jedem einzelnen Rad untergebracht ist.

17. Vorrichtung nach Anspruch 1, mindestens ein Paar Radbausätze aufweisend, wobei jeder Radbausatz das Rad (2) mit der Drehwelle und der an der Drehwelle montierten Bremstrommel (3) aufweist, und jede von der Mehrzahl rotierender elektrischer Maschinen eine Leistungsausgabewelle aufweist und sich in der gleichen Richtung und mit der gleichen Drehzahl dreht,
wobei die Steuereinrichtung den Betrieb der Radbausätze individuell steuert, und
wobei die rotierenden elektrischen Maschinen (7) so angeordnet sind, dass alle Leistungsausgabewellen der rotierenden elektrischen Maschinen zum Rad (2) des Radbausatzes exzentrisch angeordnet sind.

## Revendications

1. Appareil équipé de roues électriques (101) pour se déplacer, comprenant :
une paire de roues droite et gauche (2), chaque roue ayant un arbre rotatif et chaque roue étant équipée d'une unité de freinage positionnée sur chaque côté roue ;
une pluralité de machines électriques rotatives (7) entraînant chacune des roues droite et gauche de sorte que les roues servent de roues électriques, où la pluralité de machines électriques rotatives entraînant la même roue de la paire de roues droite et gauche ont chacune un arbre rotatif dont la position est décalée de l'arbre rotatif de ladite roue ; et
une unité de commande (10, 12) commandant les fonctionnements des machines électriques rotatives (7) ; et
une unité de transfert de couple réduisant des sorties de la pluralité de machines électriques rotatives pour transférer les sorties réduites aux arbres de chaque roue, où l'unité de transfert de couple comprend pour chaque roue:
soit une première poulie soit une première roue dentée fixée à l'arbre rotatif de la roue (2),
soit une deuxième poulie (71) soit une deuxième roue dentée fixée à l'arbre rotatif de chacune de la pluralité de machines électriques rotatives entraînant ladite roue, qui sont supportées par un élément (8) de support, et
une ceinture (9) reliant soit la première poulie soit la première roue dentée et toutes les deuxièmes poulies ou les deuxièmes roues dentées respectivement pour transférer le couple entre elles ;
**caractérisé en ce que** l'unité de freinage comprend un tambour de frein (3) positionné sur chaque côté roue, et **en ce que** la première poulie ou la première roue dentée est fixée solidement audit tambour de frein (3).

2. Appareil selon la revendication 1, dans lequel l'arbre rotatif de chaque roue (2) a une direction axiale, une direction radiale, et une direction circonférentielle et
la pluralité de machines électriques rotatives (7) sont agencées à des emplacements qui sont équidistants de l'arbre rotatif de chaque roue (2) dans la direction radiale de l'arbre rotatif de chaque roue, qui sont les mêmes dans la direction axiale de l'arbre rotatif de chaque roue, et qui sont séparés mutuellement par des angles prédéterminés dans la direction circonférentielle de l'arbre rotatif de chaque roue (2).

3. Appareil selon la revendication 2, dans lequel les emplacements de la pluralité de machines électriques rotatives (7) sont situées au-dessus de l'arbre rotatif de chaque roue (2).

4. Appareil selon la revendication 2, dans lequel la pluralité de machines électriques rotatives (7) ont la même configuration.

5. Appareil selon la revendication 1, dans lequel l'unité de commande (10, 12) comporte un moyen destiné à déterminer s'il y a une défaillance dans le fonctionnement de l'une de la pluralité de machines électriques rotatives (7) ou non et un moyen destiné, si l'une des machines est défaillante, à amener les machines électriques rotatives restantes autres que la machine défaillante à produire un couple prédéterminé à donner à chaque roue (2).

6. Appareil selon la revendication 1, comprenant en outre
une première paire de roues composée de ladite paire de roues droite et gauche (2) entraînées individuellement comme étant les roues électriques (101),
une deuxième paire (102) de roues composée d'une paire supplémentaire de roues droite et de gauche autres que les roues de la première paire de roues,
un générateur (15) alimentant les machines électriques rotatives (7), et
un moteur à combustion interne (14) entraînant le générateur et fournissant de la puissance à la deuxième paire de roues.

7. Appareil selon la revendication 6, dans lequel l'unité de commande (12) comporte un moyen destiné à commander, en plus des fonctionnements des machines électriques rotatives (7), les fonctionnements du générateur (15) sur la base d'un mode de fonctionnement comportant un mode de freinage régénératif dans lequel à la fois le générateur (15) et les machines électriques rotatives (7) génèrent de la puissance pendant une durée dans laquelle le véhicule est en freinage régénératif.

8. Appareil selon la revendication 7, dans lequel le mode de fonctionnement comporte en outre
un mode d'entraînement à deux roues dans lequel les roues de la deuxième paire de roues (102) sont entraînées par la puissance provenant du moteur à combustion interne (14),
un mode d'entraînement à quatre roues dans lequel les roues de la deuxième paire de roues (102) sont entraînées par la puissance provenant du moteur à combustion interne (14) et les roues de la première paire de roues (102) sont entraînées par la puissance provenant des machines électriques rotatives (7), et
où le moyen (12) de commande a un moyen destiné à réaliser des commutations entre le mode d'entraînement à deux roues, le mode d'entraînement à quatre roues, et le mode de freinage régénératif en fonction des informations indiquant des changements d'une vitesse du véhicule.

9. Appareil selon la revendication 8, dans lequel le moyen de commutation est configuré pour effectuer les commutations entre le mode d'entraînement à deux roues et le mode d'entraînement à quatre roues lorsque le véhicule commence à démarrer.

10. Appareil selon la revendication 6, dans lequel au moins l'une de la pluralité de machines électriques rotatives (7) a une capacité nominale supérieure à une capacité nominale du générateur (15).

11. Appareil selon la revendication 6, dans lequel les machines électriques rotatives (7) ont un nombre de paires de pôles magnétiques plus important que celui du générateur (15).

12. Appareil selon la revendication 6, dans lequel les machines électriques rotatives (7) ont une tension nominale plus importante que celle du générateur (15).

13. Appareil selon la revendication 1, dans lequel le nombre de la pluralité de machines électriques rotatives (7) est deux,
la deuxième poulie ou la deuxième roue dentée (71) est fixée solidairement aux arbres rotatifs des deux machines électriques rotatives (7), respectivement, et
l'unité de commande (10, 12) est configurée pour commander les fonctionnements des deux machines électriques rotatives (7) de sorte que la ceinture (9) entre les deux poulies ou les deux roues dentées soit transmise avec une force de traction.

14. Appareil selon la revendication 13, dans lequel l'unité de transfert de couple comprend une poulie folle (18) qui est située entre les deux poulies (71) ou les deux roues dentées de manière à changer une direction de transfert de la ceinture (9).

15. Appareil selon la revendication 1, dans lequel le nombre de la pluralité de machines électriques rotatives (7) est trois ou plus,
la ceinture est une ceinture double face (91), et
les trois machines électriques rotatives (7) ou plus comportent deux machines électriques rotatives situées de manière adjacente l'une à l'autre, les deux machines électriques rotatives mutuellement adjacentes tournant dans des sens de rotation opposés l'une par rapport à l'autre *via* la ceinture double face.

16. Appareil selon la revendication 1, dans lequel l'unité de transfert de couple est logée à l'intérieur de chaque roue.

17. Appareil selon la revendication 1, comprenant au moins une paire d'ensembles roues où chaque ensemble roue comporte ladite roue (2) ayant ledit arbre rotatif et ledit tambour de frein (3) monté sur l'arbre rotatif, et ladite pluralité de machines électriques rotatives (7) ayant chacune un arbre de sortie de puissance et tournant dans le même sens et à la même vitesse de rotation ;
où l'unité de commande commande individuellement le fonctionnement des ensembles roues ; et
où les machines électriques rotatives (7) sont agencées de sorte que touts les arbres de sortie de puissance des machines électriques rotatives soient excentrés dans la roue (2) de l'ensemble roue.
